# EUROPEAN PATENT SPECIFICATION

(11) **EP 3 056 780 B1**
(45) Date of publication and mention of the grant of the patent: **18.07.2018**
(21) Application number: 15155183.5
(22) Date of filing: 16.02.2015
(51) Int. Cl.: F16K 31/528, F16K 3/02, F16K 3/18, F16K 3/316

(54) **Gate valve with secure sealing mechanism**
Schieberventil mit sicherem Dichtungsmechanismus
Robinet-vanne avec mécanisme d'étanchéité sécurisé

(43) Date of publication of application: 17.08.2016
(60) Divisional application: 16183204.3
(73) Proprietor: King Lai Hygienic Materials Co., Ltd., 30264 Zhubei City, Hsinchu County (TW)
(72) Inventor: Yang, Li-Chuan, 30264 Zhubei City, Hsinchu County (TW); Huang, Shu-Mei, 30264 Zhubei City, Hsinchu County (TW)
(74) Representative: Viering, Jentschura & Partner mbB Patent- und Rechtsanwälte

(56) References cited:
- US-A- 4 470 576
- US-A- 5 168 896
- US-A1- 2005 109 968
- US-B2- 7 341 237

## Description

### BACKGROUND OF THE INVENTION

### 1. Field of the Invention:

The present invention relates to gate valves, and more particularly, to a gate valve with secure sealing mechanism.

### 2. Description of the Related Art:

US 7,341,237 discloses a valve mechanism for optionally sealing or opening a valve opening in a casing, while the valve opening is provided with a seat surface. Therein, the valve mechanism comprises at least a valve member capable of moving in parallel or vertical to the seat surface of the valve opening in the casing. A driving board is disposed in the casing and connected to at least a valve member, wherein the driving board is able to move horizontally, such that the valve member is driven to move horizontally.

The valve mechanism aforementioned is able to drive the valve member to move horizontally or vertically by use of the driving board, thereby sealing the valve opening. However, the valve mechanism is not provided with any locking devices or secure mechanisms for stably securing the valve member at the sealing position, such that the driving board is easily shifted or displaced. As a result, the valve member is hindered from effectively sealing the valve opening. In a more serious environment, fluid tends to be leak out from the valve opening, causing unnecessary loss.
US 4 470 576 A, US 2005/109968 A1 and US 5 168 896 A each disclose a gate valve with secure sealing mechanism according to the preamble of claim 1. The gate valve comprises a main body, provided with a first end and a second end, with the second end having a valve opening; a driver, disposed on the main body; a sliding seat, slidingly disposed in the main body and transversely provided with a driving groove, the driving groove defining a non-linear driving track, the sliding seat provided with two parallel first guiding portions; a swing arm, with one end thereof connected to the driver and the other end thereof disposed in the driving groove, such that the driver drives the swing arm to circularly move along the driving track between a first position and a second position, so as to triggers the sliding seat to slide between the first end and the second end, wherein when the swing arm is at the first position and the second position, the swing arm is biased against a route direction of the sliding seat; and a valve member, disposed on the sliding seat for moving in parallel or vertical to the valve opening and provided with two second guiding portions, the valve member thus allowed to move in vertical to the valve opening for sealing the valve opening; wherein the sliding seat is at the first end when the swing arm is at the first position, and the sliding seat is at the second end when the swing arm is at the second position, whereby the valve member stably seals the valve opening.

### SUMMARY OF THE INVENTION

For improving aforementioned issues, the present invention discloses a gate valve with secure sealing mechanism, which applies non-linear driving track for a rolling member of a swing arm to circularly move, so as to drive a sliding seat to slide, whereby a valve member seals the valve opening of the main body. Also, when the swing arm is at a first or second position, the swing arm is biased against the route direction of the sliding seat. As a result, the sliding seat is prevented from swaying due to external force, thereby assuring the valve opening is securely sealed when the swing arm is at the second position.

For achieving the objective above, the present invention provides a gate valve with secure sealing mechanism according to claim 1. The gate valve, comprises a main body, provided with a first end and a second end, with the second end having a valve opening; a driver, disposed on the main body; a sliding seat, slidingly disposed in the main body and transversely provided with a driving groove, the driving groove defining a non-linear driving track, the sliding seat provided with two parallel first guiding portions;a swing arm, with one end thereof connected to the driver and the other end thereof disposed in the driving groove such , such that the driver drives the swing arm to circularly move along the driving track between a first position and a second position, so as to trigger the sliding seat to slide between the first end and the second end, wherein when the swing arm is at the first position and the second position, the swing arm is biased against a route direction of the sliding seat; and a valve member, disposed on the sliding seat for moving in parallel or vertical to the valve opening and provided with two second guiding portions, the valve member thus allowed to move in vertical to the valve opening for sealing the valve opening; wherein the sliding seat the sliding seat is at the first end when the swing arm is at the first position, and the sliding seat is at the second end when the swing arm is at the second position, whereby the valve member stably seals the valve opening. Each of the first guiding portion is provided with two symmetric connecting groove, and each of the second guiding portion is provided with two symmetric matching grooves reversely disposed in relation to the connecting grooves for being coupled with the connecting grooves of the corresponding first guiding portion, with at least one circular rod passing through each of the connecting grooves and the matching grooves, respectively, such that each of the connecting grooves overlaps and cooperates with each of the matching grooves, respectively.

Preferably, the driver of the present invention is disposed on the main body and manually operated.
Preferably, the driver comprises a fixing portion externally fixed on the main body; an acting portion rotatable disposed on the fixing portion; a rotary shaft longitudinally disposed between the acting portion and the fixing portion, with one end of the rotary shaft connected to the swing arm; an operation rod passing through the acting portion and the rotary shaft for driving the rotary shaft to rotate.
Preferably one end of the swing arm is provided with an engaging hole, while one end of the rotary shaft is provided with a block for being engaged with the engaging hole. Preferably, the gate valve further comprises a fastening member transversely fastened to the engaging hole and the block.
Preferably, one end of the swing arm is provided with a rolling member which is placed in the driving groove.

Preferably, the driving track of the present invention includes a first driving section, a second driving section, and a third driving section. The second driving section is inclinedly connected between the first driving section and the third driving section, such that when the rolling member moves from the first driving section to the second driving section, the valve member perpendicularly moves against the valve opening for sealing the valve opening.

Preferably, when the swing arm is at the first position and the second position, the rolling member is positioned at an end part of the third driving section.

Preferably two sides of the inner edge of the main body are provided with a guiding plank, respectively, and two sides of the valve member are correspondingly provided with a guiding roller, respectively, for rollingly contacting the corresponding guiding plank.

Preferably a positioning groove is disposed on each of the guiding planks adjacent to the valve opening, respectively, and the positioning groove is provided with a curved portion and a distal portion, such that when the guiding wheel moves from the curved portion to the distal portion, the valve member seals the valve opening.

Preferably, the shape of the connecting groove is substantially identical with the shape of the matching groove.

Preferably, the connecting groove and the matching groove are provided with a first end and a second end, respectively, with a bias section disposed between the first end and the second end.

Preferably, the first guiding portion is formed of two parallel first planks with a certain spacing therebetween, and the second guiding portion is formed of two parallel second planks with a certain spacing therebetween, while the two second planks are sandwiched by the two first planks, with a linkage plank disposed between the two second planks, such that movement of each of the circular rods are synchronized. Preferably, four corners of the sliding seat is provided with a first roller, respectively, for rollingly contacting the inner lateral sides of the two guiding planks.
Preferably, the sliding seat is provided with plural second rollers for rollingly contacting the inner face of the main body on one side in opposite to the valve opening.
Preferably, one end of the sliding seat adjacent to the driving groove is provided with a guiding wheel for contacting the inner face of the main body on one side provided with the valve opening.

### BRIEF DESCRIPTION OF THE DRAWINGS

**Fig. 1** is a perspective view of the gate valve in accordance with the present invention.
**Fig. 2** is an internal schematic view illustrating the sliding seat at the first end in accordance with the present invention
**Fig. 3** is an internal schematic view illustrating the sliding seat at the second end in accordance with the present invention.
**Fig. 4** is a schematic view illustrating the status of the driver connected with the swing arm in accordance with the present invention.
**Fig. 5** is a sectional schematic view illustrating the valve opening sealed by the valve member in accordance with the present invention.
**Fig. 6** is a horizontal sectional schematic view illustrating the status of the sliding seat contacted with the main body.
**Fig. 7** is an exploded view of the sliding seat and the valve member in accordance with the present invention.
**Fig. 8A** to Fig. 8C are schematic views illustrating the relative displacements between the connecting groove and the matching groove.
**Fig. 9A** to Fig. 9D are schematic views illustrating different positions of the swing arm in relation to the driving groove in accordance with the present invention.

### DETAILED DESCRIPTION OF THE INVENTION

The aforementioned and further advantages and features of the present invention will be understood by reference to the description of the preferred embodiment in conjunction with the accompanying drawings where the components are illustrated based on a proportion for explanation but not subject to the actual component proportion.

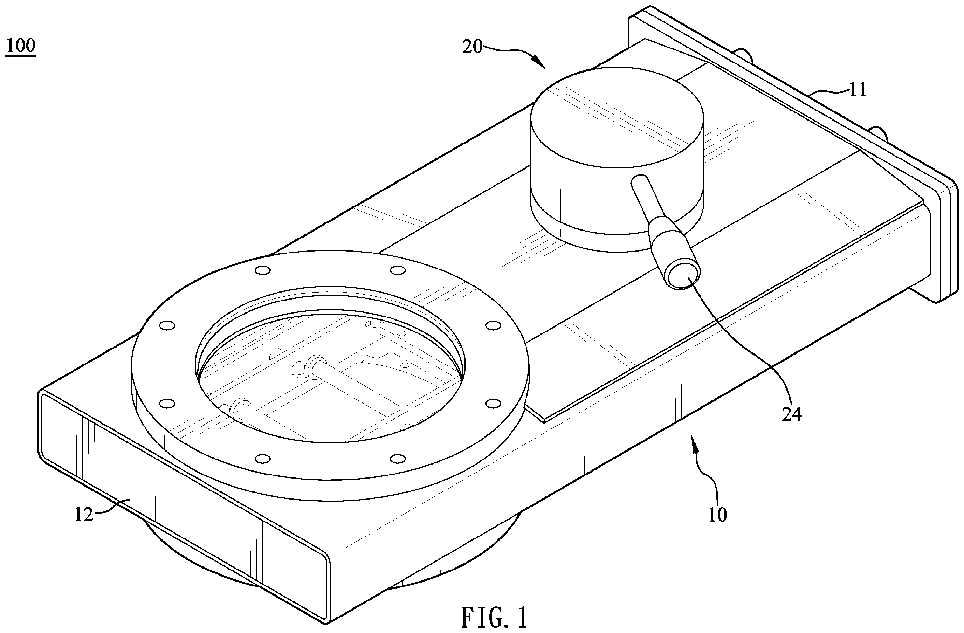

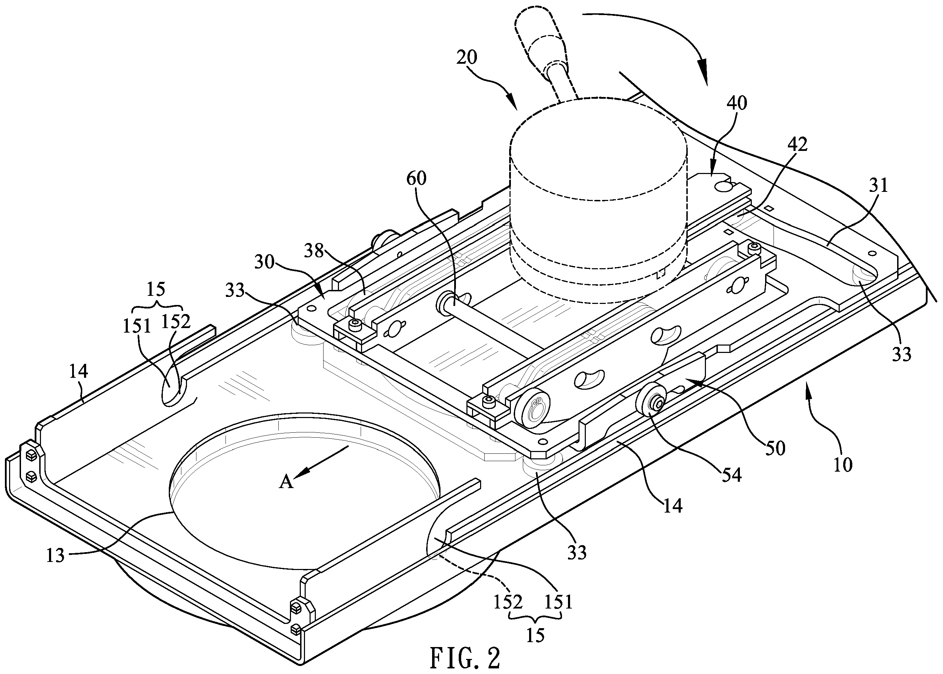

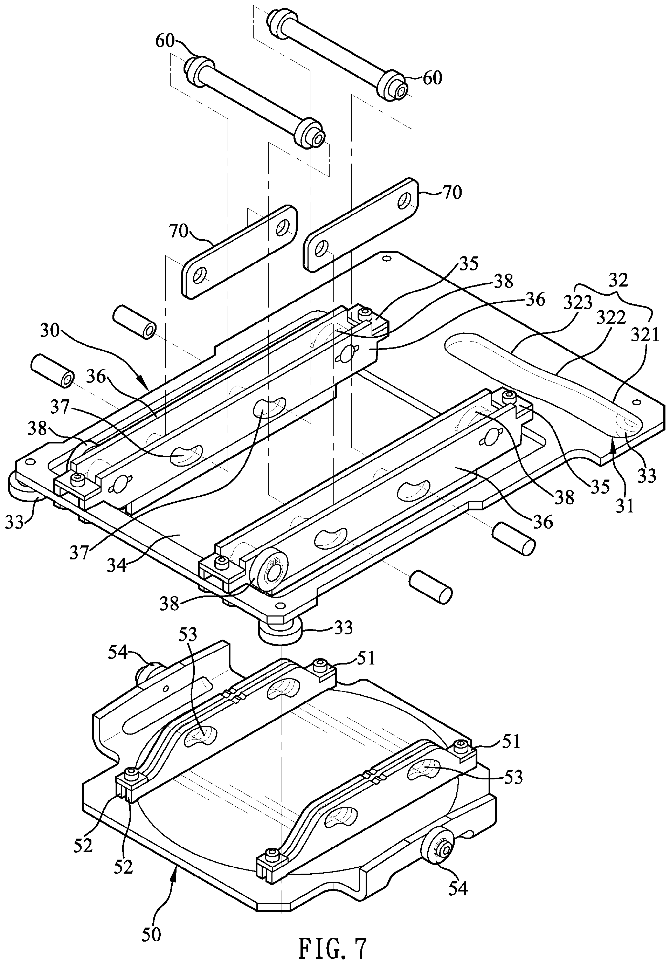

Referring to **Fig. 1** to **Fig. 9**, the present invention provides a gate valve with secure sealing mechanism **100**, comprising a main body **10**, a driver **20**, a sliding seat **30**, a swing arm **40**, and a valve member **50**. Therein, the main body **10** is hollow and provided with a first end **11** and a second end **12**. The second end **12** has a valve opening **13** disposed on a lateral side thereof. The driver **20** drives the swing arm **40** to rotate, so as to trigger the sliding seat **30** to reciprocate along the direction in accordance with the arrowhead **A** in **Fig. 2**, whereby the valve member **50** seals the valve opening **13**.

The main body **10** is provided with two guiding planks **14** disposed on two sides of the inner edge thereof, respectively, and a positioning groove **15** is disposed on the guiding plank **14** adjacent to the valve opening **13**. Also, the positioning groove **15** is provided with a curved portion 151 and a distal portion **152**.

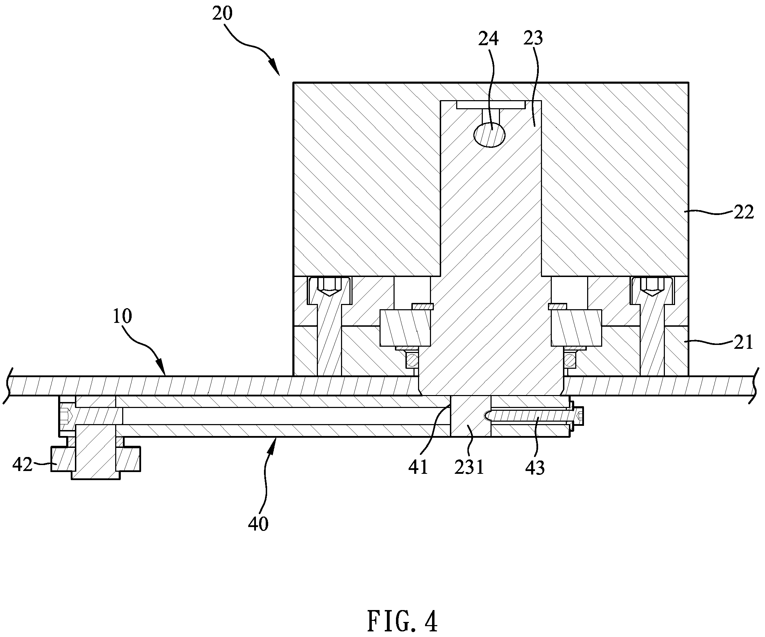

The driver **20** is disposed on the main body **10**, as shown in **Fig. 4****.** In the preferred embodiment, the driver **20** is rotatable disposed on the main body **10** and operated manually. Also, the driver **20** is allowed to be driven pneumatically. Further, the driver **20** comprises a fixing portion **21**, an acting portion **22**, a rotary shaft **23**, and an operation rod **24**. The fixing portion **21** is fixed on the top of the main body **10**, and the acting portion **22** is rotatable disposed on the fixing portion **21**. The rotary shaft **23** is mounted with a bearing and thereby longitudinally disposed between the acting portion **22** and the fixing portion **21**, with one end of the rotary shaft **23** inserted into the main body **10**. The operation rod **24** passes through the acting portion **22** and the rotary shaft **23**; in the preferred embodiment, the operation rod **24** is screwed to the rotary shaft **23** for driving the rotary shaft **23** to rotate. In addition, one block **231** is disposed on the end of the rotary shaft **23** for engaging the swing arm **40**, such that the driver **20** drives the swing arm **40** to work.

The sliding seat **30** is slidingly disposed in the main body **10**, with one end thereof transversely provided with a driving groove **31**. The driving groove **31** defines a non-linear driving track **32**, while the driving track **32** comprises a first driving section **321**, a second driving section **322**, and a third driving section **323**. Therein, the second driving section **322** is inclinedly connected between the first driving section **321** and the third driving section **323**. End parts of the first driving section **321** and the third driving section **323** are both in an arc shape. Four corners of the sliding seat **30** is provided with a first roller **33**, respectively, for rollingly contacting the inner lateral sides of the two guiding planks **14**.

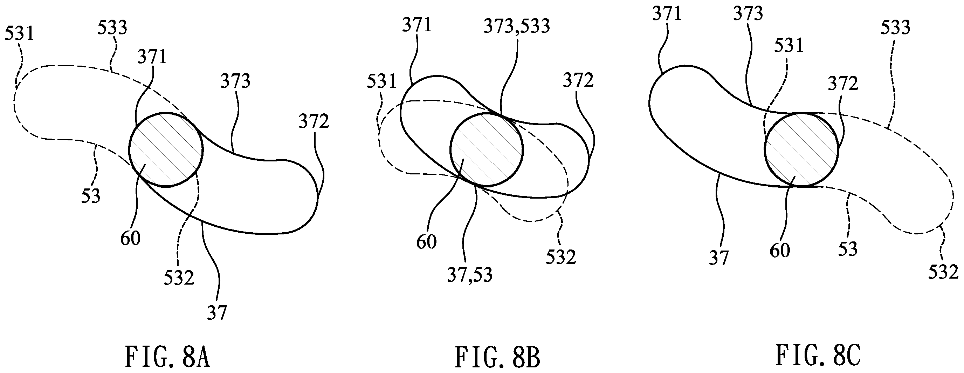

One hollow portion **34** is disposed on the sliding seat **30** adjacent the driving groove **31**, with two first guiding portions **35** fixed in parallel on the hollow portion **34**. Therein, the first guiding portion **35** is formed of two first planks **36** which are disposed in parallel with a certain spacing therebetween, while each of the two first planks **36** is provided with two connecting grooves **37**, such that the connecting groove **37** on each of the two first planks **36** are symmetrically disposed. Therein, each of the connecting grooves **37** has a first end **371** and a second end **372**, with a bias section **373** disposed therebetween, as shown in **Fig. 8A** to **Fig. 8C**.

Furthermore, two ends of the first guiding portion **35** of the sliding seat **30** are provided with a second roller **38**, respectively, for rollingly contacting the inner face of the main body **10** on one side in opposite to the valve opening 13. Therein, one of the second rollers **38** on the first guiding portion **35** is disposed between the two first planks **36**, while the other second roller **38** on the other end thereof is disposed on the outer first plank **36** of the two first planks **36**.

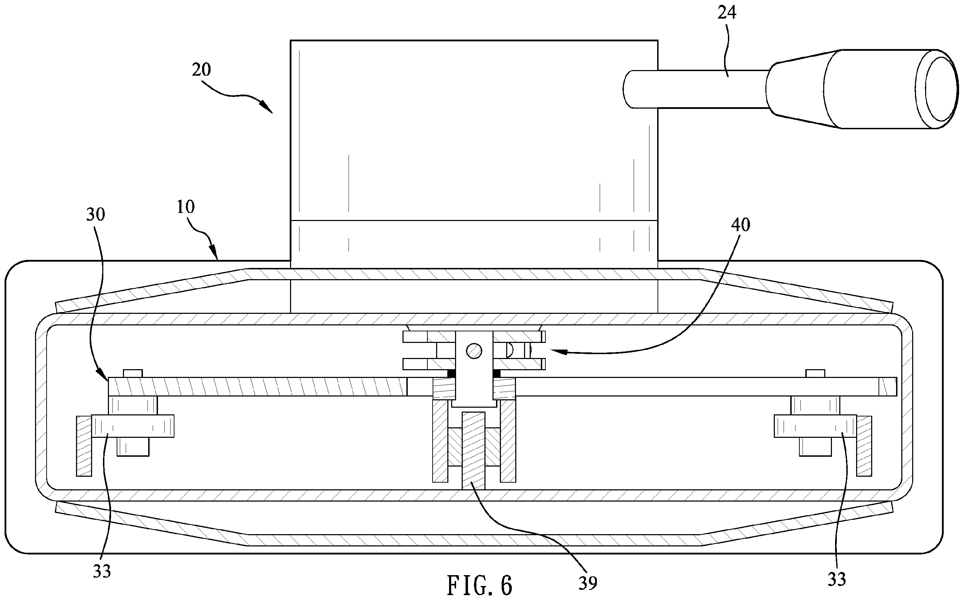

Further, one end of the sliding seat **30** adjacent to the driving groove **31** is provided with a guiding wheel **39** for contacting the inner face of the main body **10** on one side provided with the valve opening **13**, as shown in **Fig. 6**. Through the configuration of the first roller **33** with the second roller **38** and the guiding wheel **39**, the sliding seat **30** is allowed to slide in the main body **10**.

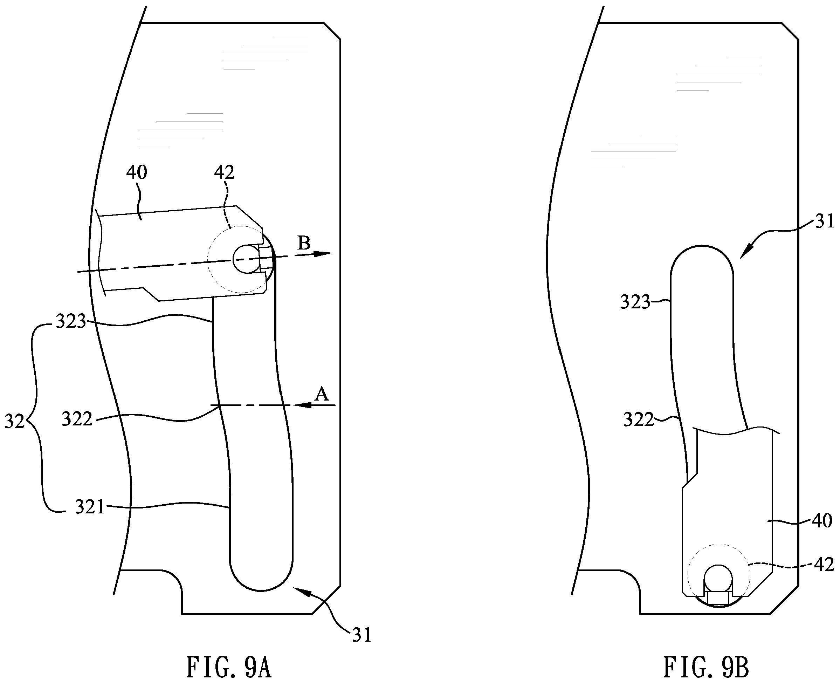

The swing arm **40** is provided with an engaging hole **41** on one end thereof and a rolling member **42** on the other end thereof, so as to be placed in the driving groove **31**. The engaging hole **41** of the swing arm **40** is applied for engaging and fixing the block **231** of the rotary shaft **23**, and a fastening member **43** is transversely fastened to the engaging hole **41** and the block **231**. Therein, the swing arm **40** is formed of two planks, and the fastening member **43** is allowed to be fastened to the two planks, thereby fixing the swing arm **40**. Thus, the driver **20** is able to drive the swing arm **40** to circularly move by use of the rolling member **42** along the driving track **32** between the first end **11** and the second end **12**. Especially, when the swing arm **40** is at the first position or the second position, the swing arm **40** is biased against the route direction of the sliding seat **30**; meanwhile, the rolling member **42** is constantly placed at the end part of the third driving section **323** when the swing arm **40** is at either the first position or the second position, as shown in **Fig. 9A** to **Fig. 9D**, wherein the arrowhead **B** defines the biased direction of the swing arm **40**.

The valve member **50** is disposed on the sliding seat **30** or moving in parallel or vertical to the valve opening **13**. The valve member **50** is provided with two second guiding portions **51** which are coupled with the first guiding portions **35**, so as to seal the valve opening **13** by a linkage structure. Preferably, structures of the second guiding portions **51** and the first guiding portions **35** are similar. Each of the second guiding portions **51** is formed of two second planks **52** disposed with a certain spacing therebetween, and each of the second plank **52** is provided with two matching grooves **53**, while the matching grooves **53** are in an identical shape with the connecting grooves **37** but reversely disposed in relation to the connecting grooves **37**. Also, each of the matching grooves **53** is provided with a first end 531, a second end **532**, and a bias section 533 between the first end **531** and the second end **532**, as shown in **Fig. 8A** to **Fig. 8C****.** Each couple of the second planks **52** is disposed between a couple of the first planks **36**, and a linkage plank **70** is disposed between each couple of the second planks **52**. A guiding roller **54** is disposed on two sides of the valve member **50**, respectively, for rollingly contacting the corresponding guiding plank **14**.

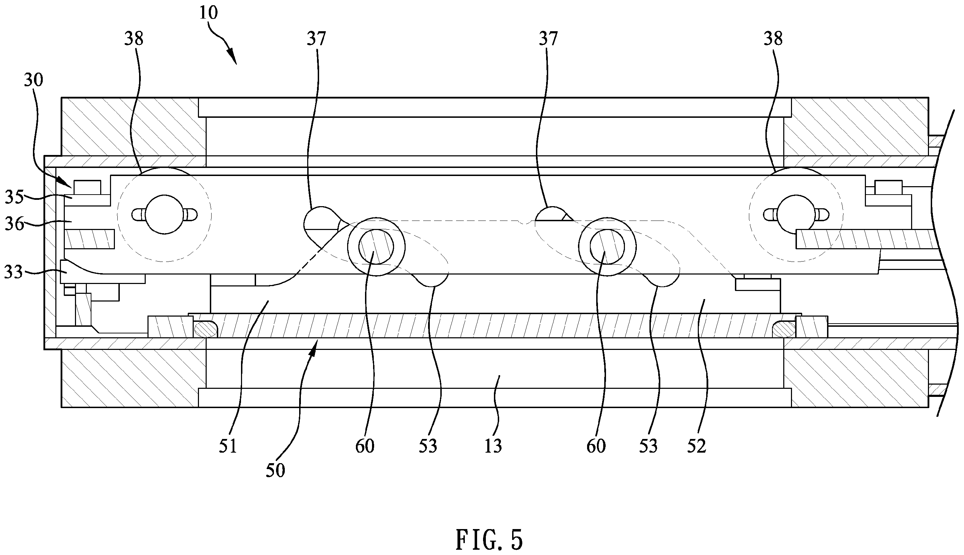

Plural circular rods **60** are disposed to pass through related connecting grooves **37**, matching grooves **53**, and the linkage planks **70**, respectively, such that the connecting groove **37** overlaps and cooperates with the matching groove **53**, while each of the circular rods **60** is allowed to synchronously move by use of the linkage planks **70**. Therein, when the rolling member **42** of the swing arm **40** moves to the second driving section **322** in the driving groove **31**, the guiding roller **54** enters the curved portion **151** of the positioning groove **15**. In addition, the valve member **50** is allowed to move in vertical to the valve opening **13** due to the linkage mechanism between the first guiding portion **35** and the second guiding portion **51**. Also, when the rolling member **42** of the swing arm **40** moves to the third driving section **323** of the driving groove **31**, the guiding roller **54** enters the distal portion **152** of the positioning groove **15**, such that the valve member **50** stably and tightly seal the valve opening **13**, as shown in **Fig. 5****.**

**Fig. 8A, Fig. 8B,** and **Fig. 8C** illustrate the route of the circular rod **60** moving in the connecting groove **37** and the matching groove **53**. Referring to **Fig. 8A**, with the corresponding connecting groove **37** and the matching groove 53, the circular rod **60** is placed in an overlapping area of the first end **371** of the connecting groove **37** and the second end **532** of the matching groove **53**. The circular rod **60** is limited by the arc-shaped ends of the connecting groove **37** and the matching groove **53**, such that the sliding seat **30** remains in a stop status and is thereby prevented from swaying.

Referring to **Fig. 8B**, when the sliding seat **30** horizontally moves along the direction defined by the arrowhead **A** (as shown in **Fig. 2**), a linkage effect is produced among the connecting groove **37**, the matching groove **53**, and the circular rod 60 until the guiding roller **54** enters the distal portion **152** of the positioning groove **15**, such that the valve member **50** vertically moves toward the valve opening **13**.

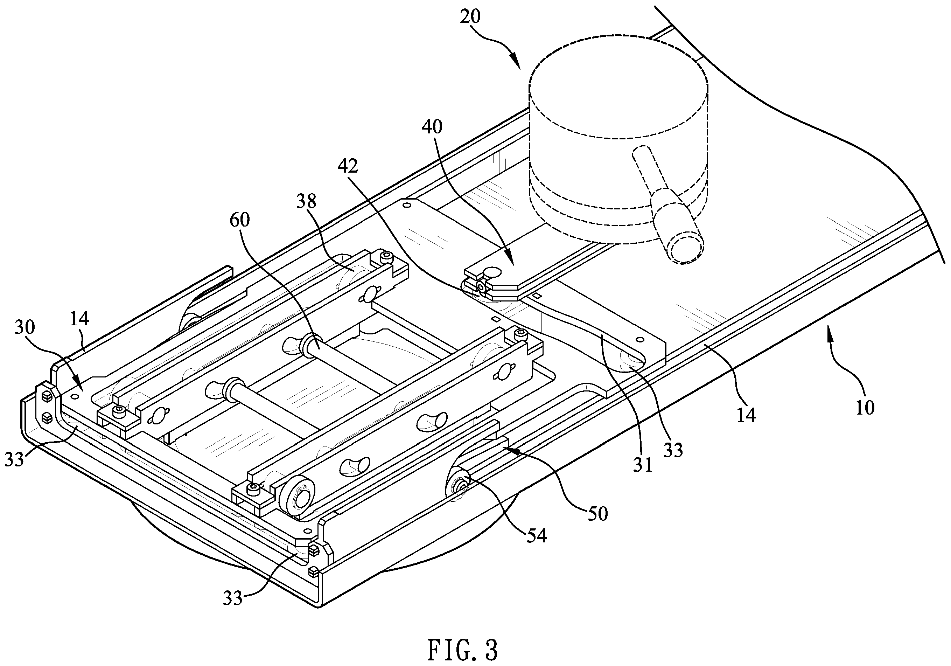

Referring to **Fig. 8C**, when the rolling member **42** of the swing arm **40** moves to the third driving section **323** (as shown in **Fig. 3**), the circular rod **60** is placed in the second end 372 of the connecting groove **37** and the first end **531** of the matching groove **53**, such that the sliding seat **30** remains in a stop status again, whereby the valve member **50** stably seal the valve opening **13**.

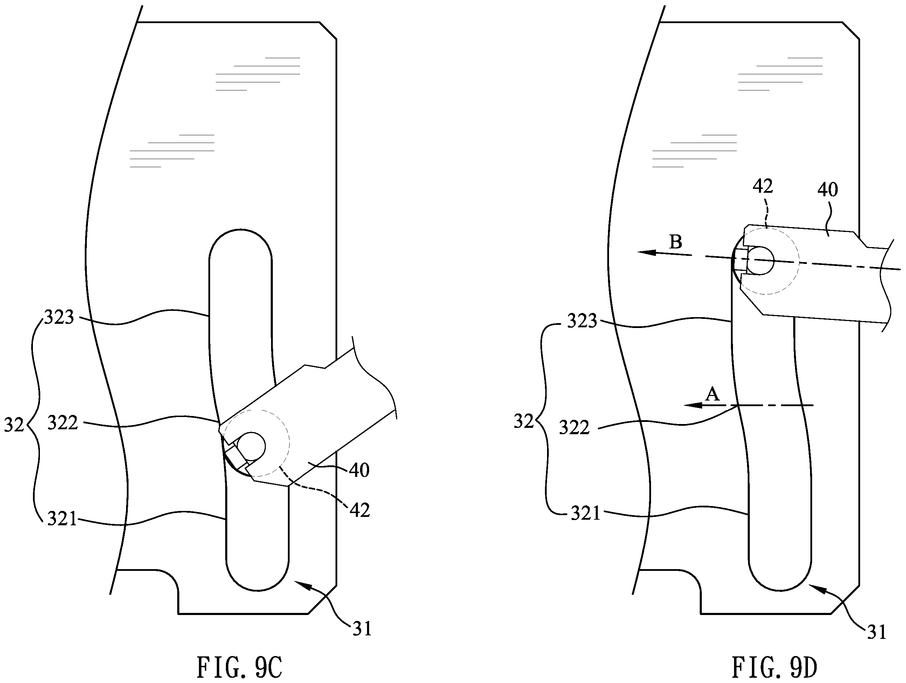

**Fig. 9A**, **Fig. 9B**, and **Fig. 9C** illustrate the swing arm **40** placed at different positions against the driving groove **31.** Referring to **Fig. 9A**, the swing arm **40** is at the first position, and the rolling member **42** is in the end part of the third driving section **323**. Meanwhile, the sliding seat **30** is placed at the first end 11 of the main body, as shown in **Fig. 1** and **Fig. 2****.**

Referring to **9B**, the swing arm **40** is driven to move along the driving track **32** of the driving groove **31** to the end part of the first driving section **321**.

Referring to **Fig. 9C****,** the rolling member **42** of the swing arm **40** moves from the first driving section **321** to the second driving section **322**. Meanwhile, the sliding seat **30** moves close to the second end **12** of the main body **10**, such that the guiding roller **54** enters the curved portion **151** of the positioning groove **15**, whereby the valve member **50** vertically moves toward the valve opening **13** to seal the valve opening **13**. When the guiding roller **54** enters the distal portion **152** of the positioning groove **15**, the valve member **50** stably and tightly seal the valve opening **13**, as shown in **Fig. 5**.

Referring to **Fig. 9D**, the swing arm **40** is at the second position, and the rolling member **42** is in the end part of the third driving section **323** again. When the swing arm **40** is at either the first position or the second position, position of the swing arm **40** is biased against the route direction of the sliding seat **30**. Thus, the sliding seat **30** is prevented from swaying, whereby the valve member **50** seals the valve opening **13** much effectively when the swing arm **40** is at the second position, so as to prevent the sliding seat **30** from being imposed with lateral force. Therefore, the sealing effect between the valve member **50** and the valve opening **13** is assured.

Although particular embodiments of the invention have been described in detail for purposes of illustration, various modifications and enhancements may be made without departing from the spirit and scope of the invention. Accordingly, the invention is not to be limited except as by the appended claims.

## Claims

1. A gate valve (100) with secure sealing mechanism, comprising:
a main body (10), provided with a first end (11) and a second end, with the second end (12) having a valve opening (13);
a driver (20), disposed on the main body;
a sliding seat (30), slidingly disposed in the main body (10) and transversely provided with a driving groove (31), the driving groove (31) defining a non-linear driving track (32), the sliding seat (30) provided with two parallel first guiding portions (35);
a swing arm (40), with one end thereof connected to the driver (20) and the other end thereof disposed in the driving groove (31), such that the driver (20) drives the swing arm (40) to circularly move along the driving track (32) between a first position and a second position, so as to trigger the sliding seat (30) to slide between the first end (11) and the second end (12), wherein when the swing arm (40) is at the first position and the second position, the swing arm (40) is biased against a route direction of the sliding seat (30); and
a valve member (50), disposed on the sliding seat (30) for moving in parallel or vertical to the valve opening (13) and provided with two second guiding portions (51), the valve member (50) thus allowed to move in vertical to the valve opening (13) for sealing the valve opening (13);
wherein the sliding seat (30) is at the first end (11) when the swing arm (40) is at the first position, and the sliding seat (30) is at the second end (12) when the swing arm (40) is at the second position, whereby the valve member (50) stably seals the valve opening (13),
**characterized in that**
each first guiding portion (35) is provided with two symmetric connecting grooves (37), and each second guiding portion (51) is provided with two symmetric matching grooves (53) reversely disposed in relation to the connecting grooves (37) for being coupled with the connecting grooves (37) of the corresponding first guiding portion (35), with at least one circular rod (60) passing through each of the connecting grooves (37) and the matching grooves (53), respectively, such that each of the connecting grooves (37) overlaps and cooperates with each of the matching grooves (53), respectively.

2. The gate valve (100) of claim 1, wherein the driver (20) is rotatable disposed on the main body (10) and operated manually.

3. The gate valve (100) of claim 1, wherein the driver (20) comprises a fixing portion (21) externally fixed on the main body (10); an acting portion (22) rotatable disposed on the fixing portion (21); a rotary shaft (23) longitudinally disposed between the acting portion (22) and the fixing portion (21), with one end of the rotary shaft (23) connected to the swing arm (40); an operation rod (24) passing through the acting portion (22) and the rotary shaft (23) for driving the rotary shaft (23) to rotate.

4. The gate valve (100) of claim 3, wherein one end of the swing arm (40) is provided with an engaging hole (41), while one end of the rotary shaft (23) is provided with a block (231) for being engaged with the engaging hole (41).

5. The gate valve (100) of claim 4, further comprising a fastening member (43) transversely fastened to the engaging hole (41) and the block (231).

6. The gate valve (100) of claim 1, wherein one end of the swing arm (40) is provided with a rolling member (42) which is placed in the driving groove (31).

7. The gate valve (100) of claim 6, wherein the driving groove (31) comprises a first driving section (321), a second driving section (322), and a third driving section (323), while the second driving section (322) inclinedly connected between the first driving section (321) and the third driving section (323), such that when the rolling member (42) moves from the first driving section (321) to the second driving section (322), the valve member (50) vertically moves toward the valve opening (13) for sealing the valve opening (13).

8. The gate valve (100) of claim 7, wherein when the swing arm (40) is at the first position and the second position, the rolling member (42) is positioned at an end part of the third driving section (323).

9. The gate valve (100) of claim 1, wherein two sides of the inner edge of the main body (10) are provided with a guiding plank (14), respectively, and two sides of the valve member (50) are correspondingly provided with a guiding roller (54), respectively, for rollingly contacting the corresponding guiding plank (14).

10. The gate valve (100) of claim 9, wherein a positioning groove (15) is disposed on each of the guiding planks (14) adjacent to the valve opening (13), respectively, and the positioning groove (15) is provided with a curved portion (151) and a distal portion (152), such that when the guiding wheel (54) moves from the curved portion (151) to the distal portion (152), the valve member (50) seals the valve opening (13).

11. The gate valve (100) of claim 1, wherein the shape of the connecting groove (37) is substantially identical with the shape of the matching groove (53).

12. The gate valve (100) of claim 11, wherein the connecting groove (37) and the matching groove (53) are provided with a first end (531) and a second end (532), respectively, with a bias section (533) disposed between the first end (531) and the second end (532).

13. The gate valve (100) of claim 1, wherein the first guiding portion (35) is formed of two parallel first planks (36) with a certain spacing therebetween, and the second guiding portion (51) is formed of two parallel second planks (52) with a certain spacing therebetween, while the two second planks (52) are sandwiched by the two first planks (36), with a linkage plank (70) disposed between the two second planks (52), such that movement of each of the circular rods (60) are synchronized.

14. The gate valve (100) of claim 9, wherein four corners of the sliding seat (30) is provided with a first roller (53), respectively, for rollingly contacting the inner lateral sides of the two guiding planks (14).

15. The gate valve (100) of claim 1, wherein the sliding seat (30) is provided with plural second rollers (38) for rollingly contacting the inner face of the main body (10) on one side in opposite to the valve opening (13).

16. The gate valve (100) of claim 1, wherein one end of the sliding seat (30) adjacent to the driving groove (31) is provided with a guiding wheel (54) for contacting the inner face of the main body (10) on one side provided with the valve opening (13).

## Patentansprüche

1. Schieberventil (100) mit einem sicheren Dichtungsmechanismus, umfassend:
einen Hauptkörper (10), der mit einem ersten Ende (11) und einem zweiten Ende ausgebildet ist, wobei das zweite Ende (12) eine Ventilöffnung (13) aufweist;
einen Antrieb (20), der an dem Hauptkörper angeordnet ist; einen Gleitsitz (30), der verschiebbar in dem Hauptkörper (10) angeordnet und quer mit einer Antriebsnut (31) ausgebildet ist, wobei die Antriebsnut (31) eine nichtlineare Antriebsbahn (32) definiert, wobei der Gleitsitz (30) mit zwei parallelen ersten Führungsabschnitten (35) ausgebildet ist; einen Schwenkarm (40), dessen eines Ende mit dem Antrieb (20) verbunden ist und dessen anderes Ende in der Antriebsnut (31) angeordnet ist, sodass der Antrieb (20) den Schwenkarm (40) so antreibt, um sich kreisförmig entlang der Antriebsbahn (32) zwischen einer ersten Position und einer zweiten Position zu bewegen, um den Gleitsitz (30) betätigen, um zwischen dem ersten Ende (11) und dem zweiten Ende (12) zu gleiten, wobei wenn der Schwenkarm (40) in der ersten Position und der zweiten Position ist der Schwenkarm (40) gegen eine Bewegungsrichtung des Gleitsitzes (30) vorgespannt ist; und
ein Ventilelement (50), das auf dem Schiebesitz (30) angeordnet ist, um sich parallel oder vertikal zu der Ventilöffnung (13) zu bewegen und mit zwei zweiten Führungsabschnitten (51) ausgebildet ist, wodurch sich das Ventilelement (50) senkrecht zur Ventilöffnung (13) zum Abdichten der Ventilöffnung (13) in diese hineinbewegen kann;
wobei sich der Gleitsitz (30) an dem ersten Ende (11) befindet, wenn der Schwenkarm (40) in der ersten Position ist, und der Gleitsitz (30) an dem zweiten Ende (12) ist, wenn der Schwenkarm (40) in der zweiten Position ist, wodurch das Ventilelement (50) die Ventilöffnung (13) stabil abdichtet,
**dadurch gekennzeichnet**
jeder erste Führungsabschnitt (35) mit zwei symmetrischen Verbindungsnuten (37) ausgebildet ist, und jeder zweite Führungsabschnitt (51) mit zwei symmetrisch angepassten Nuten (53) ausgebildet ist, die in Bezug auf die Verbindungsnuten (37) umgekehrt angeordnet sind um mit den Verbindungsnuten (37) des entsprechenden ersten Führungsabschnitts (35) gekoppelt zu sein, wobei zumindest eine kreisförmige Stange (60) durch jede der Verbindungsnuten (37) und der angepassten Nuten (53) verläuft, sodass jede der Verbindungsnuten (37) jede der angepassten Nuten (53) überlappt und mit dieser zusammenwirkt.

2. Schieberventil (100) nach Anspruch 1, wobei der Antrieb (20) drehbar an dem Hauptkörper (10) angeordnet ist und manuell betätigt wird.

3. Schieberventil (100) nach Anspruch 1, wobei der Antrieb (20) einen Befestigungsabschnitt (21), der extern an dem Hauptkörper (10) befestigt ist; ein Betätigungsabschnitt (22), der drehbar an dem Befestigungsabschnitt (21) angeordnet ist; eine Drehachse (23), die in Längsrichtung zwischen dem Betätigungsabschnitt (22) und dem Befestigungsabschnitt (21) angeordnet ist, wobei ein Ende der Drehachse (23) mit dem Schwenkarm (40) verbunden ist; eine Betätigungsstange (24), die durch den Betätigungsabschnitt (22) und die Drehwelle (23) hindurch verläuft, um die Drehwelle (23) drehbar anzutreiben, umfasst.

4. Schieberventil (100) nach Anspruch 3, wobei ein Ende des Schwenkarms (40) mit einem Eingriffsloch (41) ausgebildet ist, während ein Ende der Drehwelle (23) mit einem Block (231) zum Eingriff in das Eingriffsloch (41) ausgebildet ist.

5. Schieberventil (100) nach Anspruch 4, ferner umfassend ein Befestigungselement (43), das quer an dem Eingriffsloch (41) und dem Block (231) befestigt ist.

6. Schieberventil (100) nach Anspruch 1, wobei ein Ende des Schwenkarms (40) mit einem Rollelement (42) ausgebildet ist, das in der Antriebsnut (31) angeordnet ist.

7. Schieberventil (100) nach Anspruch 6, wobei die Antriebsnut (31) einen ersten Antriebsabschnitt (321), einen zweiten Antriebsabschnitt (322) und einen dritten Antriebsabschnitt (323) umfasst, wobei der zweite Antriebsabschnitt (322) geneigt zwischen dem ersten Antriebsabschnitt (321) und dem dritten Antriebsabschnitt (323) verbunden ist, sodass, wenn sich das Rollelement (42) von dem ersten Antriebsabschnitt (321) zu dem zweiten Antriebsabschnitt (322) bewegt das Ventilelement (50) sich vertikal zur Ventilöffnung (13) hinbewegt, um die Ventilöffnung (13) abzudichten.

8. Schieberventil (100) nach Anspruch 7, wobei, wenn der Schwenkarm (40) in der ersten Position und der zweiten Position ist, das Rollelement (42) an einem Endteil des dritten Antriebsabschnitts (323) positioniert ist.

9. Schieberventil (100) nach Anspruch 1, wobei zwei Seiten der Innenkante des Hauptkörpers (10) jeweils mit einem Führungspaneel (14) ausgebildet sind und zwei Seiten des Ventilelements (50) entsprechend mit einer Führungsrolle (54) ausgebildet sind, um das entsprechende Führungspaneel (14) rollbeweglich zu berühren.

10. Schieberventil (100) nach Anspruch 9, wobei eine Positionierungsnut (15) an jedem der Führungspaneele (14) angrenzend an die Ventilöffnung (13) angeordnet ist und die Positionierungsnut (15) mit einem gekrümmten Abschnitt (151) und einem distalen Abschnitt (152) ausgebildet ist, sodass, wenn sich das Führungsrad (54) von dem gekrümmten Abschnitt (151) zu dem distalen Abschnitt (152) bewegt, das Ventilelement (50) die Ventilöffnung abdichtet (13).

11. Schieberventil (100) nach Anspruch 1, wobei die Form der Verbindungsnut (37) im Wesentlichen identisch mit der Form der angepassten Nuten (53) ist.

12. Schieberventil (100) nach Anspruch 11, wobei die Verbindungsnut (37) und die angepassten Nuten (53) mit einem ersten Ende (531) bzw. einem zweiten Ende (532) mit einem Vorspannabschnitt (533) ausgebildet sind, der zwischen dem ersten Ende (531) und dem zweiten Ende (532) angeordnet ist.

13. Schieberventil (100) nach Anspruch 1, wobei der erste Führungsabschnitt (35) aus zwei parallelen ersten Paneelen (36) mit einem bestimmten Abstand dazwischen ausgebildet ist und der zweite Führungsabschnitt (51) aus zwei parallelen zweiten Paneelen (52) mit einem bestimmten Abstand dazwischen ausgebildet ist, während die zwei zweiten Paneelen (52) sandwichartig von den zwei ersten Paneelen (36) umgeben sind, wobei eine Verbindungsplatte (70) zwischen den zwei zweiten Paneelen (52) angeordnet ist, sodass die Bewegung von jedem der kreisförmigen Stäbe (60) synchronisiert ist.

14. Schieberventil (100) nach Anspruch 9, wobei vier Ecken des Gleitsitzes (30) jeweils mit einer ersten Rolle (53) zum rollbeweglichen Kontakt mit den inneren lateralen Seiten der zwei Führungspaneele (14) ausgebildet sind.

15. Schieberventil (100) nach Anspruch 1, wobei der Gleitsitz (30) mit mehreren zweiten Rollen (38) zum rollbeweglichen Kontakt mit der Innenfläche des Hauptkörpers (10) auf der der Ventilöffnung (13) gegenüberliegenden Seite ausgebildet ist.

16. Schieberventil (100) nach Anspruch 1, wobei ein an die Antriebsnut (31) angrenzendes Ende des Gleitsitzes (30) mit einem Führungsrad (54) zum Kontaktieren der Innenfläche des Hauptkörpers (10) auf einer Seite mit der Ventilöffnung (13) ausgebildet ist.

## Revendications

1. Robinet-vanne (100) avec mécanisme d'étanchéité sécurisé, comprenant :
un corps principal (10), ayant une première extrémité (11) et une seconde extrémité, la seconde extrémité (12) ayant une ouverture de vanne (13) ;
un élément d'entraînement (20), disposé sur le corps principal ;
un siège coulissant (30), disposé de manière coulissante dans le corps principal (10) et muni transversalement d'une rainure d'entraînement (31), la rainure d'entraînement (31) définissant un trajet d'entraînement non-linéaire (32), le siège coulissant (30) ayant deux premières parties de guidage parallèles (35) ;
un bras pivotant (40), une extrémité de celui-ci étant reliée à l'élément d'entraînement (20) et l'autre extrémité de celui-ci étant disposée dans la rainure d'entraînement (31), de telle sorte que l'élément d'entraînement (20) amène le bras pivotant (40) à se déplacer de manière circulaire le long du trajet d'entraînement (32) entre une première position et une seconde position, de façon à déclencher le coulissement du siège coulissant (30) entre la première extrémité (11) et la seconde extrémité (12), dans lequel, lorsque le bras pivotant (40) est dans la première position et la seconde position, le bras pivotant (40) est sollicité à l'encontre d'une direction de déplacement du siège coulissant (30) ; et
un élément obturateur (50), disposé sur le siège coulissant (30) pour se déplacer parallèlement ou verticalement par rapport à l'ouverture de vanne (13) et ayant deux secondes parties de guidage (51), l'élément obturateur (50) étant ainsi autorisé à se déplacer verticalement par rapport à l'ouverture de vanne (13) pour sceller l'ouverture de vanne (13) ;
le siège coulissant (30) se trouvant à la première extrémité (11) lorsque le bras pivotant (40) est dans la première position, et le siège coulissant (30) se trouvant à la seconde extrémité (12) lorsque le bras pivotant (40) est dans la seconde position, ce par quoi l'élément obturateur (50) scelle l'ouverture de vanne (13) de manière stable,
**caractérisé par le fait que** :
chaque première partie de guidage (35) comprend deux rainures de liaison symétriques (37), et chaque seconde partie de guidage (51) comprend deux rainures appariées symétriques (53) disposées à l'inverse par rapport aux rainures de liaison (37) afin d'être couplées aux rainures de liaison (37) de la première partie de guidage correspondante (35), au moins une tige circulaire (60) passant à travers chacune des rainures de liaison (37) et des rainures appariées (53), respectivement, de telle sorte que chacune des rainures de liaison (37) chevauche et coopère avec chacune des rainures appariées (53), respectivement.

2. Robinet-vanne (100) selon la revendication 1, dans lequel l'élément d'entraînement (20) est disposé de manière rotative sur le corps principal (10) et actionné manuellement.

3. Robinet-vanne (100) selon la revendication 1, dans lequel l'élément d'entraînement (20) comprend une partie de fixation (21) fixée extérieurement sur le corps principal (10) ; une partie d'action (22) disposée de manière rotative sur la partie de fixation (21) ; un arbre rotatif (23) disposé longitudinalement entre la partie d'action (22) et la partie de fixation (21), une extrémité de l'arbre rotatif (23) étant reliée au bras pivotant (40) ; une tige d'actionnement (24) passant à travers la partie d'action (22) et l'arbre rotatif (23) afin d'entraîner l'arbre rotatif (23) en rotation.

4. Robinet-vanne (100) selon la revendication 3, dans lequel une extrémité du bras pivotant (40) comprend un trou d'engagement (41), tandis qu'une extrémité de l'arbre rotatif (23) comprend un bloc (231) destiné à être engagé avec le trou d'engagement (41).

5. Robinet-vanne (100) selon la revendication 4, comprenant en outre un élément d'attache (43) attaché transversalement au trou d'engagement (41) et au bloc (231) .

6. Robinet-vanne (100) selon la revendication 1, dans lequel une extrémité du bras pivotant (40) comprend un élément roulant (42) qui est placé dans la rainure d'entraînement (31).

7. Robinet-vanne (100) selon la revendication 6, dans lequel la rainure d'entraînement (31) comprend une première section d'entraînement (321), une deuxième section d'entraînement (322) et une troisième section d'entraînement (323), la deuxième section d'entraînement (322) étant reliée de manière inclinée entre la première section d'entraînement (321) et la troisième section d'entraînement (323), de telle sorte que, lorsque l'élément roulant (42) se déplace de la première section d'entraînement (321) à la deuxième section d'entraînement (322), l'élément obturateur (50) se déplace verticalement vers l'ouverture de vanne (13) pour sceller l'ouverture de vanne (13).

8. Robinet-vanne (100) selon la revendication 7, dans lequel, lorsque le bras pivotant (40) est dans la première position et la seconde position, l'élément roulant (42) est positionné à une partie d'extrémité de la troisième section d'entraînement (323).

9. Robinet-vanne (100) selon la revendication 1, dans lequel deux côtés du bord interne du corps principal (10) comportent une planche de guidage (14), respectivement, et deux côtés de l'élément obturateur (50) comportent, de manière correspondante, un rouleau de guidage (54), respectivement, pour entrer en contact roulant avec la planche de guidage correspondante (14).

10. Robinet-vanne (100) selon la revendication 9, dans lequel une rainure de positionnement (15) est disposée sur chacune des planches de guidage (14) de manière adjacente à l'ouverture de vanne (13), respectivement, et la rainure de positionnement (15) comprend une partie incurvée (151) et une partie distale (152), de telle sorte que, lorsque la roue de guidage (54) se déplace de la partie incurvée (151) à la partie distale (152), l'élément obturateur (50) scelle l'ouverture de vanne (13).

11. Robinet-vanne (100) selon la revendication 1, dans lequel la forme de la rainure de liaison (37) est sensiblement identique à la forme de la rainure appariée (53) .

12. Robinet-vanne (100) selon la revendication 11, dans lequel la rainure de liaison (37) et la rainure appariée (53) ont une première extrémité (531) et une seconde extrémité (532), respectivement, avec une section de sollicitation (533) disposée entre la première extrémité (531) et la seconde extrémité (532).

13. Robinet-vanne (100) selon la revendication 1, dans lequel la première partie de guidage (35) est formée de deux premières planches parallèles (36) avec un certain espacement entre elles, et la seconde partie de guidage (51) est formée de deux secondes planches parallèles (52) avec un certain espacement entre elles, les deux secondes planches (52) étant prises en sandwich par les deux premières planches (36), avec une planche formant biellette (70) disposée entre les deux secondes planches (52), de telle sorte que les mouvements de chacune des tiges circulaires (60) sont synchronisés.

14. Robinet-vanne (100) selon la revendication 9, dans lequel quatre coins du siège coulissant (30) comportent un premier rouleau (53), respectivement, pour entrer en contact roulant avec les côtés latéraux internes des deux planches de guidage (14).

15. Robinet-vanne (100) selon la revendication 1, dans lequel le siège coulissant (30) comporte plusieurs seconds rouleaux (38) pour entrer en contact roulant avec la face interne du corps principal (10) sur un côté opposé à l'ouverture de vanne (13).

16. Robinet-vanne (100) selon la revendication 1, dans lequel une extrémité du siège coulissant (30) adjacente à la rainure d'entraînement (31) comporte une roue de guidage (54) pour entrer en contact avec la face interne du corps principal (10) sur un côté ayant l'ouverture de vanne (13).
